# EUROPÄISCHE PATENTANMELDUNG

(11) **EP 2 631 497 A1**
(43) Veröffentlichungstag der Anmeldung: **28.08.2013**
(21) Anmeldenummer: 13153910.8
(22) Anmeldetag: 04.02.2013
(51) Int. Cl.: F16B 2/18, F16B 21/02, F16B 21/04

(54) **Aus wenigstens drei miteinander verbindbaren Teilen gebildetes Haltesystem**

(30) Priorität: 27.02.2012 DE 102012101572
(71) Anmelder: Krones Aktiengesellschaft, 93073 Neutraubling (DE)
(72) Erfinder: Semmelmann, Matthias, 93073 Neutraubling (DE)
(74) Vertreter: Benninger, Johannes

(57) **Zusammenfassung**

Es ist ein aus wenigstens drei miteinander verbindbaren Einzelteilen gebildetes Haltesystem (1) offenbart, bei dem ein Flanschabschnitt (22) eines Wechselbauteils (21) über zwei um eine gemeinsame Längsachse (A) relativ zueinander verdrehbare Funktionsbauteile (5, 7) eines Haltekopfes (3) fixierbar ist. Die beiden Funktionsbauteile (5, 7) des Haltekopfes (3) weisen jeweils eine nicht kreisrunde Öffnungen (10, 11) auf, die in einer ersten Verdrehlage (V1) der beiden Funktionsbauteile (5, 7) miteinander fluchten, so dass der Flanschabschnitt (22) des Wechselbauteils (21) über die Öffnungen (10, 11) in einen Sitz (2) des Haltekopfes (3) einsetzbar ist und aus dem Sitz (2) entfernbar ist und die in einer zweiten Verdrehlage (V2) nicht miteinander fluchten, so dass der Flanschabschnitt (22) im Sitz (2) am Haltekopf (3) unabnehmbar festgesetzt ist.

## Beschreibung

Die vorliegende Erfindung betrifft ein aus wenigstens drei miteinander verbindbaren Teilen gebildetes Haltesystem mit den Merkmalen des Oberbegriffs des Anspruchs 1. Weiter betrifft die Erfindung ein Wechselbauteil für ein derartiges Haltesystem.

Der Stand der Technik kennt bereits diverse Haltesysteme, welche je nach zu haltender Komponente unterschiedlich konstruktive Ausgestaltungen aufweisen können.

Beispielsweise zeigt die EP 0 081 277 A2 ein Klemmittel, welches aus einer Platte mit einem Aufnahmeschaft besteht. Die Platte ist U-förmig ausgebildet. Sie kann über einen Spannhebel, welcher über ein Gewinde geführt wird, verformt werden, so dass im Aufnahmeschaft ein Profil gehalten werden kann. Hierbei werden die Haltekräfte direkt vom Klemmittel auf das Profil übertragen. Besitzt das Profil ein großes Eigengewicht, so sind große Klemmkräfte erforderlich, was ggf. zu einer Beschädigung des Profils führen kann. Insbesondere bei schnellen Wechselvorgängen und mehreren unterschiedlichen Profilen kann die Klemmkraft nicht immer genau dimensioniert werden. Bei zu geringer Klemmkraft kann das Profil nicht fest durch die Platte gehalten werden, bei zu großer Klemmkraft kann die bereits erwähnte Beschädigung resultieren.

Auch tritt bei dem Klemmittel der EP-Patentanmeldung bei zahlreichen durchgeführten Wechselvorgängen ein Verschleiß des Gewindes auf, was eine Reparatur des Klemmittels oder einen vollständigen Austausch notwendig macht.

Aufgabe der Erfindung ist, ein Haltesystem zur Verfügung zu stellen, mittels welchem schnelle Wechselvorgänge realisiert werden können. Eine weitere Aufgabe besteht darin, ein Haltesystem zur Verfügung zu stellen, bei welchem das Risiko einer Beschädigung des Wechselbauteils reduziert und ein vorzeitiger Verschleiß des Haltesystems zumindest weitgehend ausgeschlossen werden kann. Zudem soll das Haltesystem eine unkomplizierte konstruktive Ausgestaltung besitzen.

Die obige Aufgabe wird durch ein Haltesystem gelöst, das die Merkmale in dem Schutzanspruch 1 umfasst. Weitere vorteilhafte Ausgestaltungen werden durch die Unteransprüche beschrieben.

Das erfindungsgemäße Haltesystem besteht aus wenigstens drei miteinander verbindbaren Einzelteilen. Hierbei ist ein Teil als Wechselbauteil mit Flanschabschnitt ausgebildet. Die zwei weiteren Teile sind relativ zueinander um eine gemeinsame Längsachse verdrehbare Funktionsbauteile und bilden gemeinsam den Haltekopf aus. Hierbei besitzt jedes Funktionsbauteil des Haltekopfes eine nicht kreisrunde Öffnung. Die Öffnungen können beispielsweise als Durchbrüche ausgebildet sein. Unter Wirkzusammenhang der beiden Funktionsbauteile und ihrer jeweiligen Öffnungen ist der Flanschabschnitt des Wechselbauteils am Haltekopf fixierbar.

Das Wechselbauteil kann hierbei eine Arbeitskomponente sein, welche direkt über ihren jeweiligen Flansch am Haltekopf angeordnet werden kann. Beispielsweise kann es sich hierbei um jegliche bekannten Bohrwerkzeuge, Wellen oder weitere Komponenten handeln. Auch kann der Haltekopf Bestandteil einer Maschine sein oder für eine Maschine Verwendung finden. In der Praxis kann das Haltesystem somit für eine Sternradkonstruktion oder weitere Maschinen verwendet werden. Bei der Sternradkonstruktion kann es sich beispielsweise um ein Sternrad handeln, wie es zum Transport von Behältnissen in einer Abfüllanlage vorgesehen ist. Das Sternrad bzw. die Sternradkonstruktion kann mittels des Haltesystems an einer insbesondere motorisch angetriebenen Welle fixiert werden, wobei durch das Haltesystem eine einfache und schnelle Austauschbarkeit gewährleistet wird.

Ein denkbarer und bevorzugter Einsatzbereich findet sich beispielsweise in der Füll- und Verschließtechnik, um Arbeitswerkzeuge an Arbeitsvorrichtungen anzuordnen. So können beispielsweise Verschließkonen an Verschließköpfen einer Verschließeinheit einer Verschließmaschine einfach und schnell wechselbar angeordnet werden. Ebenso können ganze Verschließköpfe an einer Verschließeinheit einer Verschließmaschine einfach und schnell wechselbar angeordnet werden.

Vorgesehen ist zudem, dass die beiden Funktionsbauteile des Haltekopfes jeweils eine nicht kreisrunde Öffnung aufweisen, welche in einer ersten Verdrehlage der beiden Funktionsbauteile miteinander fluchten, so dass ein Flanschabschnitt des Wechselbauteils über die Öffnungen in einen Sitz des Haltekopfes einsetzbar ist. In dieser ersten Verdrehlage ist es somit möglich, den Flanschabschnitt des Wechselbauteils in den Sitz des Haltekopfes und über die fluchtenden Öffnungen einzusetzen und aus dem Sitz über die fluchtenden Öffnungen zu entfernen. Das Wechselbauteil kann bei erster Verdrehlage somit vom Haltekopf abgenommen werden. Beispielsweise können die beiden fluchtenden Öffnungen den Flanschabschnitt direkt gegen einen Sitz des Haltekopfes lenken. Der Sitz kann eine Gegenanschlagfläche umfassen, welche mit dem Flanschabschnitt des Haltekopfes in Oberflächenkontakt bringbar ist. Als nicht kreisrunde Formgebungen kommen für die Öffnungen beispielsweise ovale, eckige oder weitere Formgebungen in Betracht.

Auch existiert eine zweite Verdrehlage, bei welcher die Öffnungen nicht miteinander fluchten und bei welcher der Flanschabschnitt im Sitz am Haltekopf unabnehmbar festgesetzt ist. Hierbei kann vorgesehen sein, dass der Flanschabschnitt im Sitz an einer oder mehreren der bereits genannten Gegenanschlagsflächen zur Anlage kommt und in der zweiten Verdrehlage axial unbeweglich festgesetzt ist.

Die erfindungsgemäße Ausgestaltung kann mittels vollständiger oder teilweiser Überschneidung der beiden in den Funktionsbauteilen angeordneten Öffnungen einen Aus- bzw. Eingang für den Flanschabschnitt selektiv vermindern oder vergrößern. Die Verminderung bzw. Vergrößerung des Aus- bzw. Eingangs kann über eine relative Rotations- bzw. Verdrehbewegung der beiden Funktionsbauteile zueinander herstellbar sein. Ist der Aus- bzw. Eingang derart vermindert, dass aufgrund der Geometrie des Flanschabschnittes der Flanschabschnitt den Aus- bzw. Eingang nicht mehr passieren kann, so kann es sein, dass dieser am Haltekopf fixiert ist, bis mittel relativer Rotation bzw. Verdrehung der Funktionsbauteile des Haltekopfes zueinander der Aus- bzw. Eingangs vergrößert wird und ein Passieren des Aus- bzw. Eingangs für den Flanschabschnitt in der zweiten Verdrehlage ermöglicht wird. Durch dieses erfindungsgemäße Prinzip ist kein Klemmen des Flanschabschnittes notwendig. Eine Beschädigung des Flanschabschnittes aufgrund von Klemmkräften kann somit ausgeschlossen werden.

In einer bevorzugten Ausführungsform besitzt der Haltekopf mindestens ein Anschlussstück mit Kontaktmitteln zum Befestigen des Haltekopfes an einer Systemkomponente, wie beispielsweise einer Arbeitsvorrichtung oder einem Arbeitswerkzeug. Beispielsweise kann das Anschlussstück zur Befestigung über geeignete Rast- und/oder Schnapp- und/oder Klemmverbindungen verfügen. Vorstellbar ist hierbei, dass das Anschlussstück zur Verbindung ein Außen- oder Innengewinde aufweist.

Weiterhin kann das Anschlussstück als Welle und/oder Bolzen ausgebildet sein und sich zumindest abschnittsweise entlang der gemeinsamen Längsachse, welche als Verdreh- bzw. Rotationsachse der beiden Teile des Haltekopfes ausgebildet ist, erstrecken.

Zur Gewichtsoptimierung, Materialersparnis und/oder um einen Reinigungsvorgang für das Haltesystem zu vereinfachen, kann vorgesehen sein, dass der Haltekopf als Hohlkörper mit ein oder mehreren vorzugsweise radial um die gemeinsame Längsachse angeordneten Öffnungen ausgebildet ist. Zur Reinigung kann über die Öffnungen ein Innenraum des Hohlkörpers mit fluiden Medien durchspült werden.

Um die beiden Teile des Haltekopfes auf einfache Weise verdrehbar aneinander anzuordnen, können die Funktionsbauteile jeweils eine Scheibe mit der jeweiligen Öffnung umfassen und/oder als Scheibe mit der jeweiligen Öffnung ausgebildet sein, wobei die Scheiben verdrehbar aneinander anliegen. Hierbei müssen die Scheiben nicht zwingend direkt aneinander anliegen. Auch kann vorgesehen sein, dass zwischen den Scheiben ein- oder mehrere Gleitelemente angeordnet sind, um ein relatives Verdrehen der beiden Scheiben zueinander zu ermöglichen.

Weiter ist denkbar, dass ein erstes der zwei Funktionsbauteile des Haltekopfes ein oder mehrere Führungselemente besitzt und/oder am ersten Funktionsbauteil des Haltekopfes ein oder mehrere Führungselemente angeordnet sind, die jeweils durch eine um die gemeinsame Längsachse verlaufende bogenförmige Aussparung eines zweiten der zwei Funktionsbauteile des Haltekopfes greifen. Beispielsweise kann das jeweilige Führungselement in Durchbrüche des jeweiligen Funktionsbauteils eingepresst und/oder eingeschraubt sein. Sind mehrere bogenförmige Aussparungen vorhanden, so können diese radial um die gemeinsame Längsachse angeordnet sein. Über die Führungselemente und die jeweiligen bogenförmigen Aussparungen können das erste Funktionsbauteil des Haltekopfes und das zweite Funktionsbauteil des Haltekopfes bei ihrer relativen Verdrehung in einer Zwangsbewegungsbahn geführt werden. Mittels der Verbindung der beiden Funktionsbauteile über die erwähnten Führungselemente kann weiterhin eine einfache Anordnung des ersten Funktionsbauteils am zweiten Funktionsbauteil zur Verfügung gestellt werden.

Außerdem kann es sein, dass an den freien Enden der ein oder mehreren Führungselemente, welche dem Haltekopf abgewandt sind, jeweils eine Tragekomponente zum axialen Fixieren des ersten Funktionsbauteils des Haltekopfes am zweiten Funktionsbauteil angeordnet ist. Beispielsweise können die Führungselemente über Gewindeabschnitte verfügen und die Tragekomponenten über korrespondierende Gegengewindeabschnitte. Mittels der Gewindeabschnitte und der Gegengewindeabschnitte können die Tragekomponenten auf die jeweiligen Führungselemente aufgeschraubt werden. In weiteren Ausführungsformen können die Tragekomponenten unter Übermaßpassung bzw. Presspassung auf ihr jeweiliges zugehöriges Führungselement aufgesetzt sein. Die am jeweiligen Führungselement angeordnete Tragekomponente kann auf seiner dem benachbarten Funktionsbauteil zugewandten Seite einen Durchmesser aufweisen, welcher größer als der minimale Durchmesser der Aussparung ausgebildet ist, durch welche das jeweilige Führungselement greift. Nicht zwingend muss die Tragekomponente als separate Komponente ausgebildet sein. Auch ist vorstellbar, dass die Tragekomponente Bestandteil des Führungselementes ist und ggf. einstückig mit diesem ausgebildet ist.

Um eine Beschädigung bei relativer Verdrehung der beiden Funktionsbauteile zueinander zu verhindern, kann es sein, dass zwischen ein oder mehreren Tragekomponenten und einem benachbarten Funktionsbauteil des Haltekopfes ein elastisches Zwischenstück angeordnet ist. Das elastische Zwischenstück kann beispielsweise über Gummi oder Kunststoff ausgebildet sein. Denkbar sind auch weitere materielle Ausgestaltungen mit federnden bzw. elastischen Eigenschaften. Die jeweilige Tragekomponente kommt hierbei über das elastische Zwischenstück an dem benachbarten Funktionsbauteil zur Anlage. Die beiden Funktionsbauteile können somit kraftbeaufschlagt verbunden werden, wobei weiterhin ihre relative Verdrehbarkeit ohne Beschädigung aufgrund einer Anlage an der Tragekomponente gewährleistet bleibt.

Auch kann das Haltesystem ein oder mehrere Sperrmittel umfassen, über welche die beiden Funktionsbauteile des Haltekopfes in der ersten und/oder zweiten Verdrehlage festsetzbar sind. Beispielsweise kann diese Festsetzung über Lösen einer Rast- und/oder Schnapp- und/oder Klemmverbindung aufhebbar sein. In einer Ausführungsform der vorliegenden Erfindung ist die Festsetzung mittels Beaufschlagung des ersten und oder des zweiten Funktionsbauteils des Haltekopfes mit einem vordefinierten Moment lösbar. Hierbei können das erste Funktionsbauteil und das zweite Funktionsbauteil eine bestimmte Fläche aufweisen, die sich bei erster Verdrehlage und/oder bei zweiter Verdrehlage berühren. Die Flächen können ein Material aufweisen, welches einen definierten Reibungskoeffizienten besitzt. Der definierte Reibungskoeffizient kann derart gewählt sein, dass bei genannter Berührung das erste und das zweite Funktionsbauteil unverdrehbar festgesetzt sind und die Festsetzung über ein vordefiniertes Moment gelöst werden kann. Auch kann es sein, dass eines der beiden Funktionsbauteile als Sperrmittel einen elastischen Vorsprung besitzt, der in das jeweilige andere Funktionsbauteil bei erster und/oder zweiter Verdrehlage eintaucht. Beispielsweise kann der elastische Vorsprung zum Eintauchen eine vorzugsweise konvex gewölbte Phase aufweisen. In weiteren Ausführungsformen können das erste und das zweite Funktionsbauteil als Sperrmittel einen in erster oder zweiter Verdrehlage fluchtenden Durchbruch aufweisen, in welcher ein Blockierungsstift einsetzbar ist.

Es kann sein, dass zum Aufbringen des vordefinierten Momentes ein oder mehrere Angriffspunkte am ersten und/oder zweiten Funktionsbauteil vorhanden sind. Ist der Haltekopf mit seinen Funktionsbauteilen Bestandteil einer Arbeitsmaschine, so kann das Lösen der Festsetzung über die jeweilige Arbeitsmaschine erfolgen. In weiteren Ausführungsformen besteht die Möglichkeit, die Festsetzung zusätzlich oder anstelle des Lösens über die Arbeitsmaschine manuell aufzuheben. Werden die Angriffspunkte definiert gewählt, so besteht bei erfindungsgemäßer Ausgestaltung die Möglichkeit für einen Benutzer, das Festsetzen der Funktionsbauteile einhändig zu lösen. In einer bevorzugten Ausführungsform kann vorgesehen sein, dass das Festsetzen manuell und ohne Werkzeug gelöst werden kann.

Zudem kann vorgesehen sein, dass der Sitz an die Formgebung des Flanschabschnittes derart angepasst ist, dass der Flanschabschnitt im Wesentlichen passgenau in den Sitz einsetzbar ist und bei vorhandener zweiter Verdrehlage im Wesentlichen unbeweglich im Sitz angeordnet ist. Sind der Flanschabschnitt und der Sitz passgenau zueinander ausgebildet, so kann es in bevorzugten Ausführungsformen sein, dass der Flanschabschnitt lediglich in einer oder mehreren vordefinierten Positionen in den Sitz einsetzbar ist. Eine Ausrichtung des Flanschabschnittes zum Haltekopf bei Einsetzung des Flanschabschnittes in den Sitz kann bei derartiger Passgenauigkeit gewährleistet werden. Ein weiterer Vorteil kann sich bei passgenauer Ausbildung von Sitz und Flanschabschnitt während eines Arbeitsvorganges ergeben. Wird der Haltekopf rotierend und um die gemeinsame Längsachse bewegt, so wird auch bei hoher Rotationsbeschleunigung aufgrund der Passgenauigkeit ein Verdrehen des Flanschabschnittes um die gemeinsame Längsachse vermieden. Der Flanschabschnitt ist rotationsunbeweglich im Sitz gehalten.

Weiterhin kann vorgesehen sein, das die Geometrie des Flanschschnittes derart an die Geometrie der Öffnungen angepasst ist, dass die fluchtenden Öffnungen bei erster Verdrehlage vom Flanschabschnitt mit keinem oder geringem Spiel passierbar sind. Bereits über die Öffnungen kann der Flanschabschnitt hierdurch genau in den Sitz geführt werden. Ist zudem der Flanschabschnitt im Wesentlichen passgenau zum Sitz ausgestaltet, so genügt eine geringe relative Verdrehung der beiden Funktionsbauteile zueinander, um diese in die zweite Verdrehlage zu bringen und den Flanschabschnitt am Haltekopf unabnehmbar festzusetzen.

Insbesondere sind Wechselbauteile für das erfindungsgemäße Haltesystem geeignet, die einen ebenen Deckenabschnitt aufweisen und auf wenigstens einer Seite des Deckenabschnitts mindestens eine hängende Dachschräge aufweisen. Vorzugsweise kann auf zwei gegenüberliegenden Seiten des Deckenabschnittes jeweils eine hängende Dachschräge vorhanden sein. Die Dachschräge ist nun dergestalt, dass diese bei Fixierung des Flanschabschnittes am Haltekopf nicht mit dem Haltekopf in Kontakt gebracht ist. Hierbei kann es sein, dass lediglich der Deckenabschnitt mit einer Anschlagfläche des Sitzes bei Fixierung des Flanschabschnittes am Haltekopf in Kontakt gebracht ist.

Auch kann das Wechselbauteil auf seiner dem Deckenabschnitt abgewandten Seite zur Verbindung mit einer Systemkomponente, wie beispielsweise einer Arbeitsvorrichtung oder einem Arbeitswerkzeug, vorgesehen sein und hierzu eine Welle und/oder einen Bolzen aufweisen, der sich bei Fixierung des Flanschabschnittes am Haltekopf zumindest abschnittsweise entlang der gemeinsamen Längsachse erstreckt. Besitzt ein Formatbauteil zur Fixierung mit einer Systemkomponente ebenso eine Welle und/oder einen Bolzen bzw. ist ein Formatbauteil als Welle und/oder als Bolzen ausgebildet, so kann es sein, dass die Welle und/oder der Bolzen des Formatbauteils und die Welle und/oder der Bolzen des Wechselbauteils bei Fixierung des Flanschabschnittes am Haltekopf im Wesentlichen parallel zueinander ausgerichtet sind. Das Formatbauteil kann somit als Welle ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform eines Haltekopfes mit erstem und zweitem Funktionsbauteil in einer ersten Verdrehlage;
Figur 2 zeigt eine schematische Ansicht von unten auf den bereits in Figur 1 gezeigten Haltekopf in erster Verdrehlage;
Figur 3 zeigt eine schematische Ansicht einer Ausführungsform eines Wechselbauteils für ein erfindungsgemäßes Haltesystem;
Figur 4 zeigt eine schematische Ansicht einer Ausführungsform des Haltekopfes in erster Verdrehlage mit im Sitz eingesetztem Flanschabschnitt eines Wechselbauteils;
Figur 5 zeigt eine schematische Ansicht einer Ausführungsform eines Haltekopfes für ein erfindungsgemäßes Haltesystems 1 mit erstem und zweitem Funktionsbauteil in zweiter Verdrehlage;
Figur 6 zeigt ein Haltesystem mit Haltekopf aus Figur 5 in zweiter Verdrehlage und eingesetztem Flanschabschnitt im Sitz des Haltekopfes;
Figur 7 zeigt eine schematische Ansicht von unten auf das Haltesystem aus Figur 6;
Figur 8 zeigt eine weitere schematische Ansicht eines Haltekopfes für ein erfindungsgemäßes Haltesystem;
Figur 9 zeigt eine schematisch Ansicht von unten auf eine Ausführungsform eines ersten Funktionsbauteils eines Haltekopfes für ein erfindungsgemäßes Haltesystem;
Figur 10 zeigt einen Querschnitt durch ein erstes Funktionsbauteil entlang einer Schnittlinie A-A aus Figur 9;
Figur 11 zeigt beispielhaft Öffnungen für ein erstes und zweites Funktionsbauteil, welche in einer zweiten Verdrehlage nicht miteinander fluchten;

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße System ausgebildet sein kann und stellen keine abschließende Begrenzung dar.

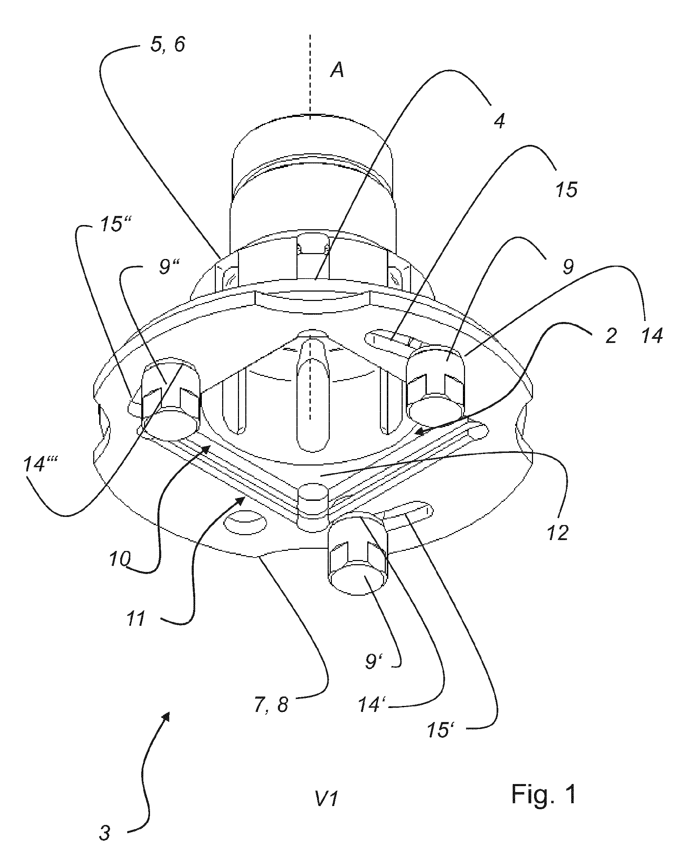

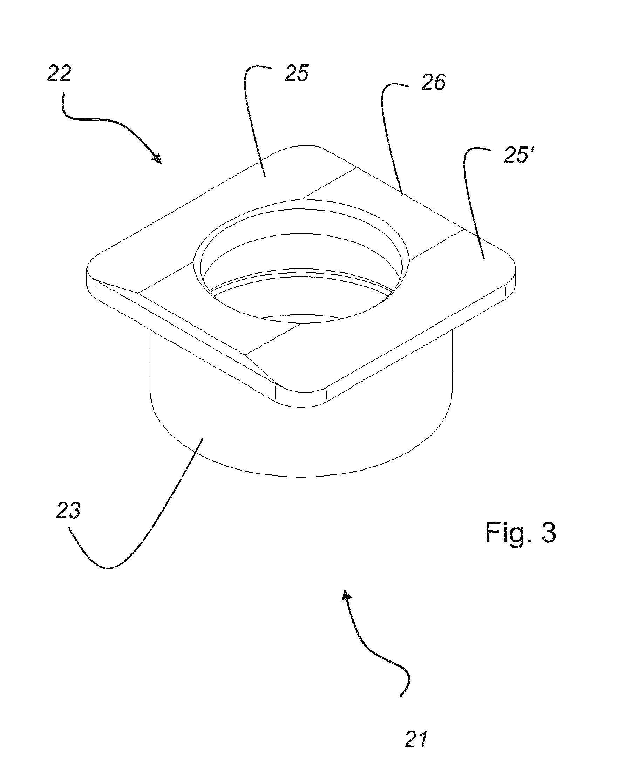

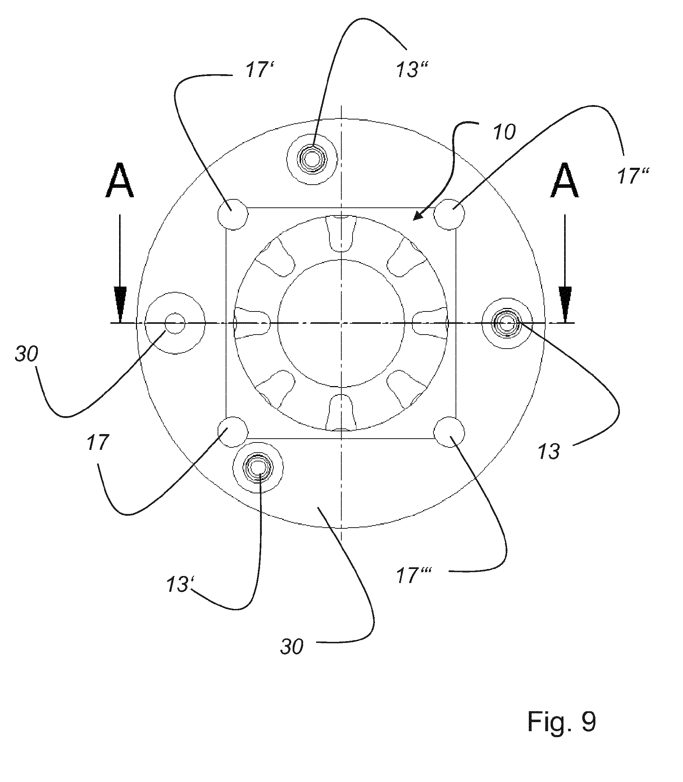

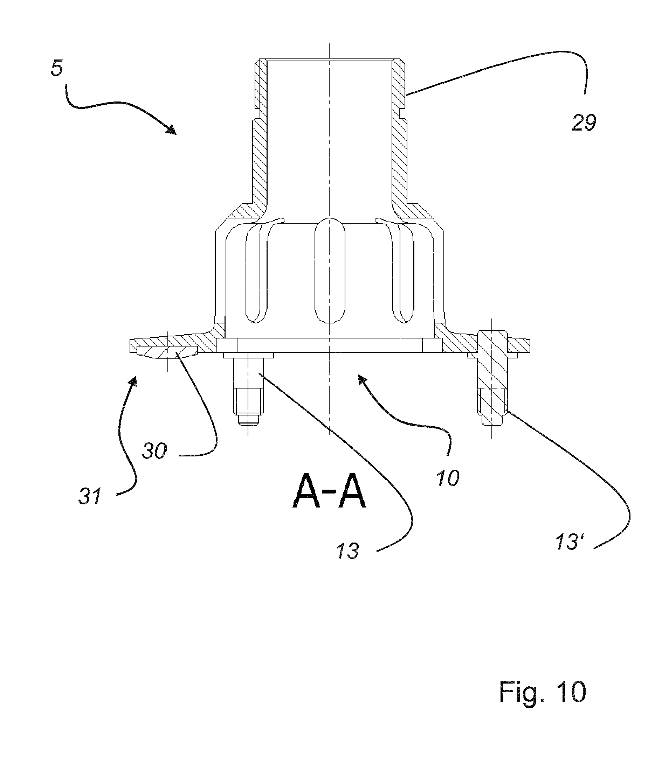

**Figur 1** zeigt eine schematische Ansicht einer Ausführungsform eines Haltekopfes 3 mit erstem und zweitem Funktionsbauteil 5 und 7 in einer ersten Verdrehlage. Das erste Funktionsbauteil 5 ist zumindest teilweise als Hohlkörper 6 ausgebildet und liegt um die Längsachse A verdrehbar an dem zweiten Funktionsbauteil 7 an. Das zweite Funktionsbauteil 7 ist als Scheibe 8 ausgebildet. Das erste Funktionsbauteil 5 ist im Bereich eines unteren und an dem zweiten Funktionsbauteil 7 anliegenden Abschnitts als Scheibe 4 ausgebildet. Weiter ist zu erkennen, dass das erste Funktionsbauteil 5 eine quadratische Öffnung 10 aufweist und das zweite Funktionsbauteil 7 ebenso eine im Wesentlichen quadratische Öffnung 11 besitzt. Die Öffnungen 10 und 11 sind hinsichtlich ihrer Öffnungsfläche identisch ausgebildet. In der in Figur 1 gezeigten ersten Verdrehlage V1 fluchten die Öffnungen 11 und 10 miteinander, so dass ein Flanschabschnitt 22 eines Wechselbauteils 21 (vgl. Figur 3) über die Öffnungen 10 und 11 in einen Sitz 2 des Haltekopfes 3 einsetzbar und aus dem Sitz 2 entnehmbar ist. Der Sitz 2 verfügt über eine Gegenanschlagfläche 12, mit welcher ein in den Sitz 2 eingesetzter Flanschabschnitt 22 des Wechselbauteils 21 in Kontakt gebracht ist und welche die Bewegung des Flanschabschnittes 22 im Haltekopf 3 entlang der Längsachse A begrenzen. Um das zweite Funktionsbauteil 7 am ersten Funktionsbauteil 5 zu halten und das erste Funktionsbauteil 5 mit dem zweiten Funktionsbauteils 7 drehbeweglich zu verbinden, hat das erste Funktionsbauteil 5 Bolzen 13, 13' und 13" ausgebildet (vgl. Figur 9) die jeweils durch bogenförmige Aussparung 15, 15' und 15" des zweiten Funktionsbauteil 7 greifen. Bei relativer Verdrehung des ersten Funktionsbauteils 5 zum zweiten Funktionsbauteil 7 sind die Funktionsbauteile 5 und 7 mittels der Bolzen 13, 13' und 13" und der bogenförmigen Aussparungen 15, 15' und 15" in einer Zwangsbewegungsbahn geführt. Die Bolzen 13, 13' und 13" sind in Durchbrüche des ersten Funktionsbauteils 5 eingepresst. Detailliert ist dies in Figur 10 zu erkennen. Weiter verfügen die Bolzen 13, 13' und 13" auf ihren dem ersten und zweiten Funktionsbauteil 5 und 7 abgewandtem freien Ende jeweils über ein Gewinde, auf welches jeweils eine Tragekomponente 9, 9' und 9" aufgeschraubt ist. Zwischen Tragekomponente 9, 9' und 9" und dem benachbarten zweiten Funktionsbauteil 7 ist jeweils ein elastisches Zwischenstück 14, 14' und 14" angeordnet. Das elastische Zwischenstück 14, 14' und/oder 14" kann beispielsweise als Gummischeibe ausgebildet sein.

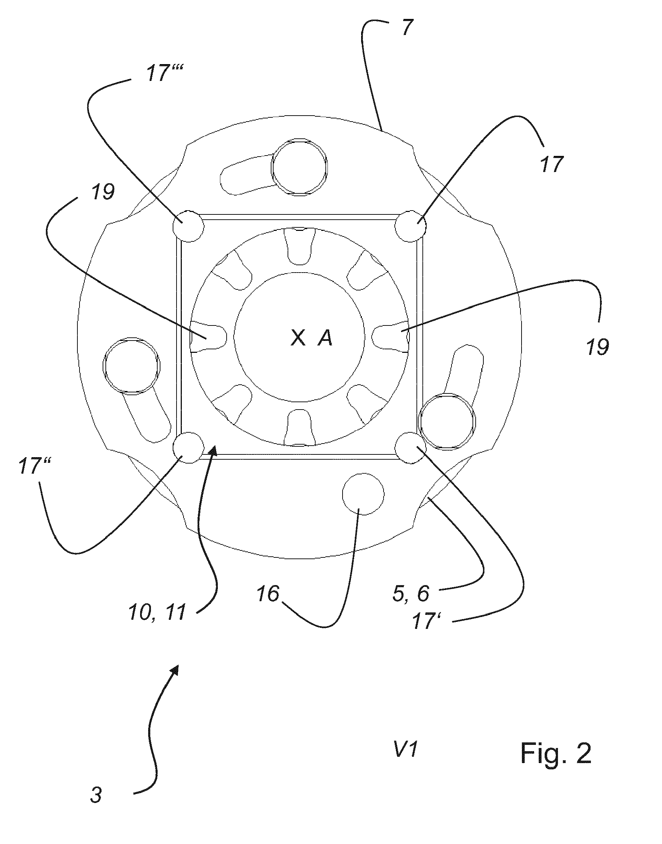

**Figur 2** zeigt eine schematische Ansicht von unten auf den bereits in Figur 1 gezeigten Haltekopf 3 in erster Verdrehlage V1. Zu erkennen ist weiterhin die gemeinsame Längsachse A, die sich durch einen zentralen Mittelpunkt der Öffnungen 10 und 11 erstreckt und die als Rotationsachse für die Relativverdrehung des ersten und zweiten Funktionsbauteils 5 und 7 ausgebildet ist. Das erste Funktionsbauteil 5 ist als Hohlkörper 6 ausgebildet. Der Haltekopf 3 umfasst mehrere Kanäle 17, 17', 17" und 17'", die sich jeweils aus dem Inneren des Hohlkörpers 6 durch das erste Funktionsbauteil 5 und das zweite Funktionsbauteil 7 erstrecken. Das erste Funktionsbauteil 5 besitzt radial um die gemeinsame Längsachse A angeordnete Öffnungen 19, in welche zur Reinigung ein fluides Medium in das als Hohlkörper 6 ausgebildete erste Funktionsbauteil 5 eingebracht werden kann und ggf. über die Kanäle 17, 17', 17", 17'" aus dem Haltekopf 3 abführbar ist. Das Wechselbauteil 21 (vgl. Figur 3) ist derart im Sitz 2 angeordnet, dass das fluide Medium unter Kontakt mit dem Wechselbauteil 21 bzw. mit Dachschrägen 25 und 25' des Wechselbauteils 21 die Kanäle 17, 17', 17" und 17'" passieren kann, so dass eine Reinigung des Wechselbauteils 21 bei eingesetztem Flanschabschnitt 22 im Sitz 2 erfolgt. Angedeutet ist zudem ein Durchgang 16 des zweiten Funktionsbauteils 7 in welcher, wie in den Figuren 9 und 10 beschrieben, ein elastischer Vorsprung 30 in zweiter Verdrehlage V2 eintauchen kann.

**Figur 3** zeigt eine schematische Ansicht einer Ausführungsform eines Wechselbauteils 21 für ein erfindungsgemäßes Haltesystem 1. Das Wechselbauteil 21 besitzt einen Flanschabschnitt 22 mit einem ebenen Deckabschnitt 26. Auf zwei gegenüberliegenden Seiten des Deckabschnittes 26 befinden sich so genannte hängende Dachschrägen 25 und 25'. Ist der Flanschabschnitt 22 im Sitz 2 des Haltekopfes 3 angeordnet, so liegt der Deckabschnitt 26 an der Gegenanschlagfläche 12 (vgl. Figur 1) an, während die Dachschrägen 25 und 25' nicht an der Gegenanschlagfläche 12 anliegen. Weiter besitzt das Wechselbauteil 21 einen Verbindungsabschnitt 23 für ein Arbeitswerkzeug. Befindet sich der Flanschabschnitt 22 des Wechselbauteils 21 im Sitz 2, so erstreckt sich der Verbindungsabschnitt 23 im Wesentlichen parallel zur gemeinsamen Längsachse A (vgl. Figur 1 und 2). Weiter ist dann der Verbindungsabschnitt 23 senkrecht verlaufend zum Deckabschnitt 26 des Wechselbauteils 21 ausgebildet.

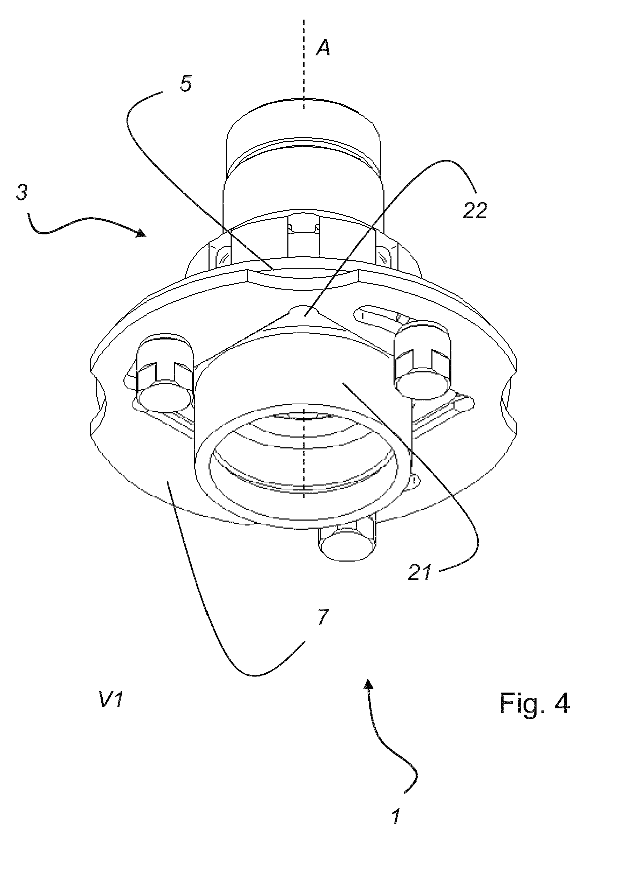

**Figur 4** zeigt eine schematische Ansicht einer Ausführungsform des Haltekopfes 3 in erster Verdrehlage V1 mit im Sitz 2 (vgl. Figur 1) eingesetztem Flanschabschnitt 22 eines Wechselbauteils 21. Dargestellt ist hierbei eine Ausführungsform eines erfindungsgemäßen Haltesystems 1, bestehend aus erstem Funktionsbauteil 5, zweitem Funktionsbauteil 7 sowie Wechselbauteil 21. Bei gezeigter erster Verdrehlage V1 des ersten Funktionsbauteils 5 zum zweiten Funktionsbauteil 7 ist das Wechselbauteil 21 vom Haltekopf 3 abnehmbar und in den Sitz 2 (vgl. Figur 1) einsetzbar. Der Flanschabschnitt 22 des Wechselbauteils 21 ist passgenau im Sitz 2 aufgenommen. Eine Rotation des Flanschabschnittes 22 und des Wechselbauteils 21 um die gemeinsame Längsachse A ist bei eingesetztem Flanschabschnitt 22 im Sitz 2 des Haltekopfes 3 nicht möglich. Wird der Haltekopf 3 beispielsweise durch eine Arbeitsvorrichtung um die gemeinsame Längsachse A rotierend angetrieben, so sitzt das Wechselbauteils 21 mit Flanschabschnitt 22 aufgrund der Passgenauigkeit von Flanschabschnitt 22 und Sitz 2 fest im Sitz 2. Durch die notwendige und passgenaue Einsetzung des Flanschabschnittes 22 in den Sitz 2 des Haltekopfes 3 erfolgt bereits bei Einsetzung eine Ausrichtung des Wechselbauteils 21 mit Flanschabschnitt 22 relativ zum Haltekopf 3.

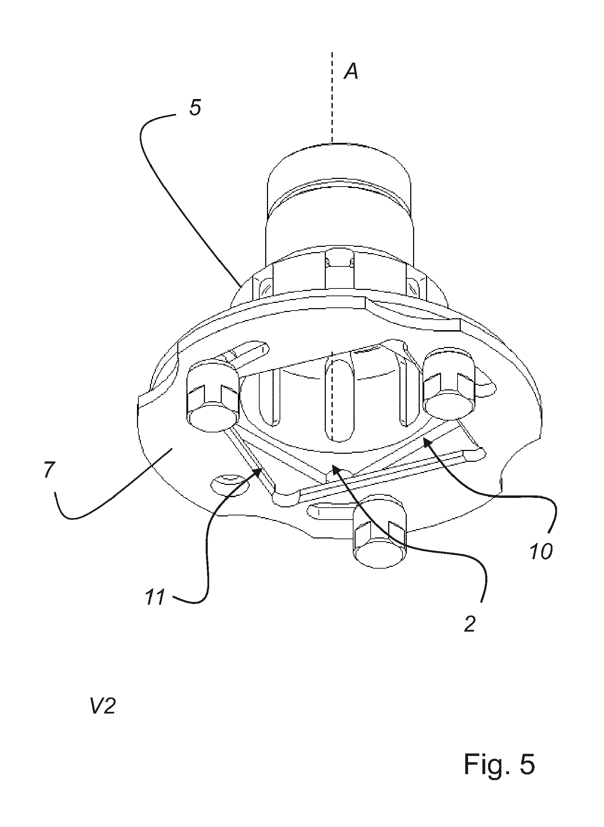

**Figur 5** zeigt eine schematische Ansicht einer Ausführungsform eines Haltesystems 1 mit erstem und zweitem Funktionsbauteil 5 und 7 in zweiter Verdrehlage V2. Das Wechselbauteil 21 aus Figur 3 ist in Figur 5 nicht im Sitz 2 angeordnet. Aus der in Figur 1 gezeigten ersten Verdrehlage V1 erfolgte eine relative Rotation- bzw. Verdrehbewegung des ersten Funktionsbauteils 5 zum zweiten Funktionsbauteil 7 um die gemeinsame Längsachse A. Die Öffnung 10 des ersten Funktionsbauteils 5 und die Öffnung 11 des zweiten Funktionsbauteils 11 fluchten bei der in Figur 5 gezeigten zweiten Verdrehlage V2 nicht. Bei eingesetztem Flanschabschnitt 22 des Wechselbauteils 21 im Sitz 2 ist dieser am Haltekopf 3 bzw. im Sitz 2 des Haltekopfes 3 unabnehmbar festgesetzt. Befindet sich das Wechselbauteil 21 nicht im Sitz 2, so kann dieses bei gezeigter zweiter Verdrehlage V2 nicht in den Sitz 2 eingesetzt werden.

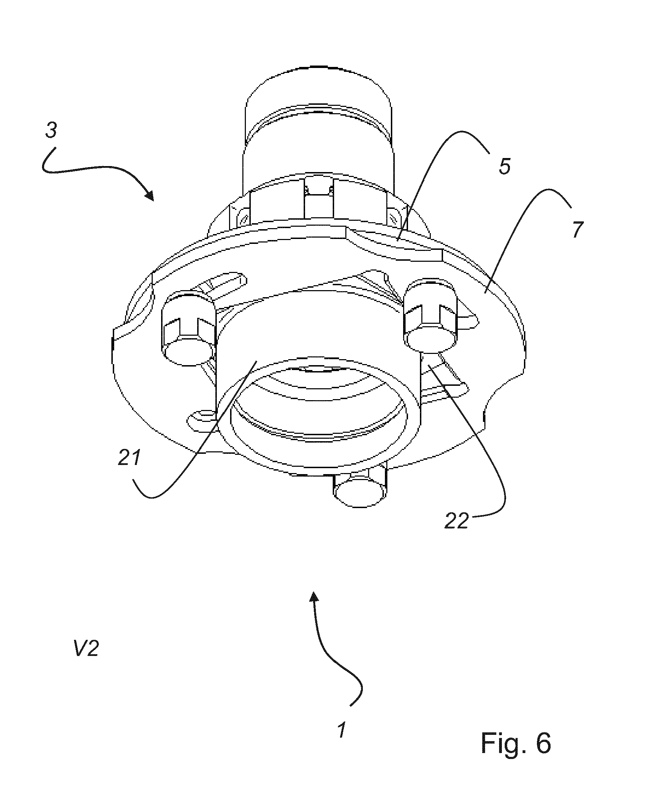

**Figur 6** zeigt das Haltesystem 1 aus Figur 5 in zweiter Verdrehlage V2 mit eingesetztem Flanschabschnitt 22 im Sitz 2 des Haltekopfes 3. Der Flanschabschnitt 22 und das Wechselbauteil sind hierbei unabnehmbar am Haltekopf 3 festgesetzt. Der Flanschabschnitt 22 liegt, vorzugsweise ohne oder mit geringem Spiel, am zweiten Funktionsbauteil an und wird von diesem in axialer Richtung unbewegbar gehalten. Da der Sitz 2 (vgl. Figur 1) des Haltekopfes 3 passgenau zum Flanschabschnitt 22 des Wechselbauteils 21 ausgebildet ist, ist das Wechselbauteil 21 in der zweiten Verdrehlage V2 ortsfest und unbeweglich am Haltekopf 3 gehalten.

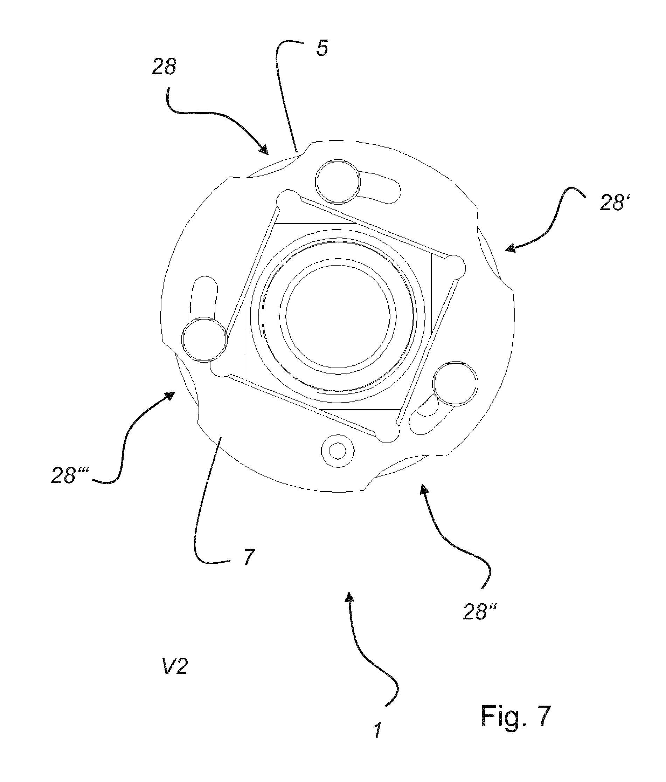

**Figur 7** zeigt eine schematische Ansicht von unten auf das Haltesystem 1 aus Figur 6 in zweiter Verdrehlage mit eingesetztem Flanschabschnitt 22 im Sitz 2 (vgl. Figur 1) des Haltekopfes 3. In Figur 7 sind zudem Angriffspunkte 28, 28', 28" und 28'" dargestellt. Über die Angriffspunkte 28, 28', 28" und 28'" kann das zweite Funktionsbauteil 7 mit einem Moment zur relativen Verdrehung gegenüber dem ersten Funktionsbauteil 5 um die gemeinsame Längsachse A beaufschlagt werden. Die Beaufschlagung mit dem Moment kann in diversen Ausführungsformen manuell durch einen Benutzer erfolgen. Werden die Angriffspunkte wie im Ausführungsbeispiel der Figur 7 dargestellt gewählt, so kann die relative Verdrehung des ersten Funktionsbauteils 5 zum zweiten Funktionsbauteil 7 einhändig vorgenommen werden. Vorstellbar ist jedoch auch, dass der Haltekopf 3 als Bestandteil einer Arbeitsvorrichtung ausgebildet ist und die Beaufschlagung über die Arbeitsvorrichtung erfolgt.

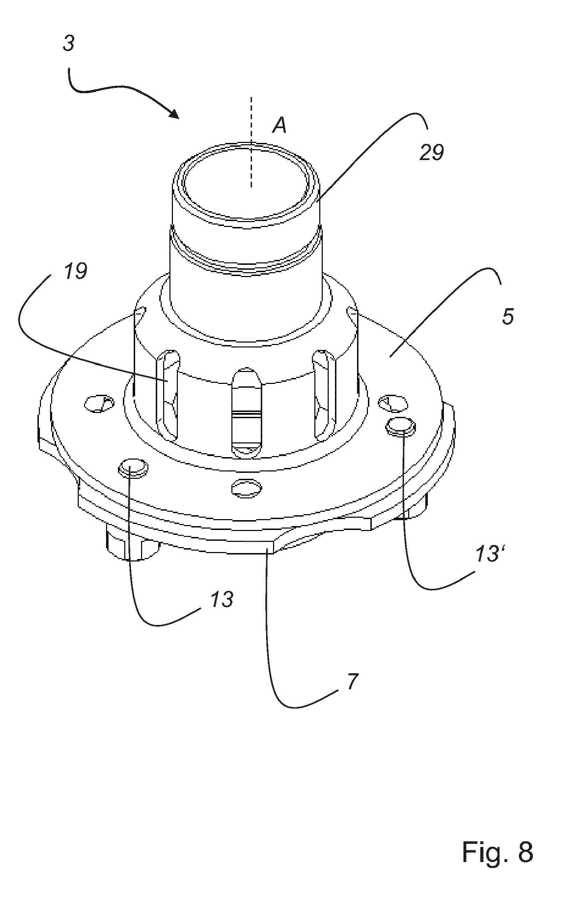

**Figur 8** zeigt eine weitere schematische Ansicht eines Haltekopfes 3 für ein erfindungsgemäßes Haltesystem 1. Dargestellt sind nochmals die um die gemeinsame Längsachse A angeordneten Öffnungen 19 des Haltekopfes 3 bzw. des ersten Funktionsbauteils 5 des Haltekopfes 3. Zudem sind die bereits vorherig erwähnten Bolzen 13 und 13' zu erkennen, welche in das erste Funktionsbauteil 5 eingepresst sind und an ihrem freien Ende jeweils eine Tragekomponente 9, 9', 9" und 9'" aufweisen (vgl. Figur 1). Das erste Funktionsbauteil 5 und somit der Haltekopf 3 besitzen ein Anschlussstück 29 zum Verbinden des Haltekopfes 3 mit einer Arbeitsvorrichtung oder einem Arbeitswerkzeug. Das Anschlussstück kann sich bei angeordnetem Flanschabschnitt 22 des Wechselbauteils 21 im Sitz 2 parallel zum Verbindungsabschnitt 23 des Wechselbauteils 21 erstrecken.

**Figur 9** zeigt eine schematisch Ansicht von unten auf eine Ausführungsform eines ersten Funktionsbauteils 5 eines Haltekopfes 3 für ein erfindungsgemäßes Haltesystem 1. Dargestellt sind weiterhin die Öffnung 10, die Bolzen 13, 13' und 13" sowie die Kanäle 17, 17', 17" und 17"'. Wie bereits in Figur 2 erwähnt, besitzt das erste Funktionsbauteil 5 einen elastischen Vorsprung 30, welcher bei zweiter Verdrehlage V2 in einen Durchgang 16 des zweiten Funktionsbauteils 7 eintaucht. Bei Eintauchen des elastischen Vorsprung 30 in den Durchgang 16 werden die Funktionsbauteile 5 und 7 derart drehfest aneinander gehalten, dass eine weitere relative Verdrehung mit Führung des elastischen Vorsprung 30 aus dem Durchgang 16 lediglich durch definierte Drehmomentbeaufschlagung des ersten Funktionsbauteils 5 und/oder des zweiten Funktionsbauteils 7 bewirkbar ist.

**Figur 10** zeigt einen Querschnitt durch ein erstes Funktionsbauteil 5 entlang einer Schnittlinie A-A aus Figur 9. Dargestellt ist nochmals der elastische Vorsprung 30, der beispielsweise in einen Aufnahmebereich des ersten Funktionsbauteils 5 eingeklebt werden kann. Wie zu erkennen, besitzt der elastische Vorsprung 30 eine konvex gewölbte Phase 31, die bei zweiter Verdrehlage in den Durchgang 16 des zweiten Funktionsbauteils 7 eintaucht.

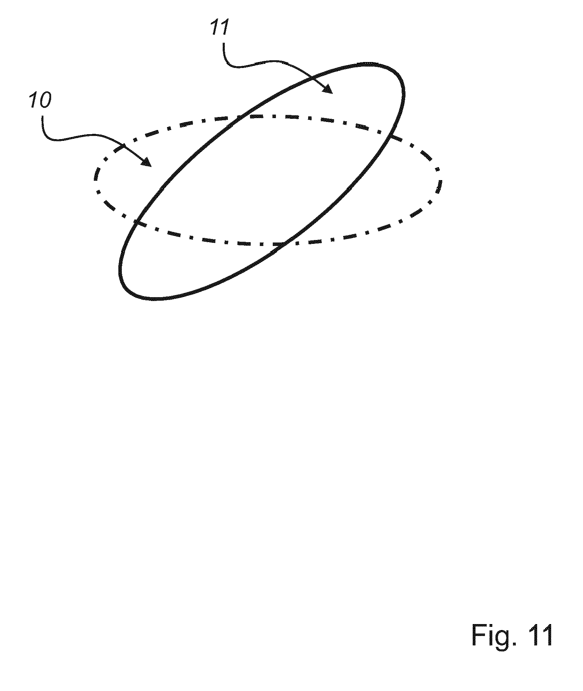

**Figur 11** zeigt beispielhaft Öffnungen 10 und 11 für ein erstes und zweites Funktionsbauteil 5 und 7, welche in einer zweiten Verdrehlage V2 nicht miteinander fluchten. Figur 11 verdeutlicht zudem eine weitere geometrische Ausgestaltungsmöglichkeit der Öffnungen 10 und 11. Nicht zwingend müssen rechteckförmige Ausgestaltungen, wie in den vorherigen Figuren gezeigt, vorliegen. Auch können in zahlreichen Ausführungsformen der vorliegenden Erfindung weitere geometrische Ausgestaltungen verwendet werden, die in einer ersten Verdrehlage nicht miteinander fluchten und in einer zweiten Verdrehlage miteinander fluchten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Haltesystem
- 2: Sitz
- 3: Haltekopf
- 4: Scheibe (erstes Funktionsbauteil)
- 5: Erstes Funktionsbauteil
- 6: Hohlkörper
- 7: Zweites Funktionsbauteil
- 8: Scheibe (zweites Funktionsbauteil)
- 9: Tragekomponente
- 10: Öffnung (erstes Funktionsbauteil)
- 11: Öffnung (zweites Funktionsbauteil)
- 13: Bolzen
- 14: Elastisches Zwischenstück
- 15: Bogenförmige Aussparung
- 16: Durchgang
- 17: Kanal
- 19: Öffnung für Fluid
- 21: Wechselbauteil
- 22: Flanschabschnitt
- 23: Verbindungsabschnitt
- 25: Dachschräge
- 26: Deckabschnitt
- 28: Angriffspunkt
- 29: Anschlusstück
- 30: Elastischer Vorsprung
- 31: Konvex gewölbte Phase
- A: Gemeinsame Längsachse
- V1: Erste Verdrehlage
- V2: Zweite Verdrehlage

## Patentansprüche

1. Aus wenigstens drei miteinander verbindbaren Einzelteilen gebildetes Haltesystem (1), bei dem ein Flanschabschnitt (22) eines Wechselbauteils (21) über zwei um eine gemeinsame Längsachse (A) relativ zueinander verdrehbare Funktionsbauteile (5, 7) eines Haltekopfes (3) fixierbar ist, wobei die beiden Funktionsbauteile (5, 7) des Haltekopfes (3) jeweils eine nicht kreisrunde Öffnung (10, 11) aufweisen, die in einer ersten Verdrehlage (V1) der beiden Funktionsbauteile (5, 7) miteinander fluchten, so dass ein Flanschabschnitt (22) des Wechselbauteils (21) über die Öffnungen (10, 11) in einen Sitz (2) des Haltekopfes (3) einsetzbar und aus dem Sitz (2) entfernbar ist und die in einer zweiten Verdrehlage (V2) nicht miteinander fluchten, so dass der Flanschabschnitt (22) im Sitz (2) am Haltekopf (3) bei zweiter Verdrehlage (V2) unabnehmbar festgesetzt ist.

2. Haltesystem (1) nach Anspruch 1, bei welchem der Haltekopf (3) mindestens ein Anschlussstück (29) mit Kontaktmitteln zum Befestigen des Haltekopfes (3) an einer Systemkomponente, wie beispielsweise einer Arbeitsvorrichtung oder einem Arbeitswerkzeug, umfasst.

3. Haltesystem (1) nach Anspruch 2, bei welchem das Anschlussstück (29) als Welle und/oder Bolzen ausgebildet ist und sich zumindest abschnittsweise entlang der gemeinsamen Längsachse (A) erstreckt.

4. Haltesystem (1) nach einem oder mehreren der Ansprüche 1 bis 3, bei welchem der Haltekopf (3) als Hohlkörper (6) mit ein oder mehreren vorzugsweise radial um die gemeinsame Längsachse (A) angeordneten Öffnungen (19) ausgebildet ist.

5. Haltesystem (1) nach einem oder mehreren der vorhergehenden Ansprüche, bei welchem die Funktionsbauteile (5, 7) jeweils eine Scheibe (4, 8) mit der jeweiligen Öffnung (10, 11) umfassen und/oder als Scheibe (4, 8) mit der jeweiligen Öffnung (10, 11) ausgebildet sind, wobei die Scheiben (4, 8) verdrehbar aneinander anliegen.

6. Haltesystem (1) nach einem oder mehreren der vorhergehenden Ansprüche, bei welchem ein erstes der zwei Funktionsbauteile (5) des Haltekopfes (3) ein oder mehrere Führungselemente (13, 13', 13") besitzt und/oder bei welchem am ersten Funktionsbauteil (5) des Haltekopf (3) ein oder mehrere Führungselemente (13, 13', 13") angeordnet sind, die jeweils durch eine um die gemeinsame Längsachse (A) verlaufende bogenförmige Aussparung (15, 15', 15") eines zweiten der zwei Funktionsbauteile (7) des Haltekopfes (3) greifen, so dass über die Führungselemente (13, 13', 13") und die jeweiligen bogenförmigen Aussparungen (15, 15', 15") die Funktionsbauteile (5, 7) bei ihrer relativen Verdrehung in einer Zwangsbewegungsbahn geführt werden.

7. Haltesystem (1) nach Anspruch 6, wobei an den freien Enden der ein oder mehreren Führungselemente (13, 13', 13"), welche dem Haltekopf (3) abgewandt sind, jeweils eine Tragekomponente (9, 9', 9") zum axialen Fixieren des ersten Funktionsbauteils (5) des Haltekopfes (3) am zweiten Funktionsbauteil (7) angeordnet ist.

8. Haltesystem (1) nach Anspruch 7, bei welchem zwischen ein oder mehreren der Tragekomponenten (9, 9', 9") und seinem benachbarten Funktionsbauteil (7) ein elastisches Zwischenstück (14, 14', 14") angeordnet ist.

9. Haltesystem (1) nach einem oder mehreren der vorhergehenden Ansprüche, wobei das Haltesystem (1) ein oder mehrere Sperrmittel (16, 30) umfasst, über welche die beiden Funktionsbauteile (5, 7) des Haltekopfes (3) in der ersten und/oder zweiten Verdrehlage (V1, V2) festsetzbar sind, wobei die Festsetzung mittels Beaufschlagung des ersten und/oder des zweiten Funktionsbauteils (5, 7) des Haltekopfes (3) mit einem vordefinierten Moment lösbar ist.

10. Haltesystem (1) nach einem oder mehreren der vorhergehenden Ansprüche, bei welchem der Sitz (2) an die Formgebung des Flanschabschnittes (22) derart angepasst ist, dass der Flanschabschnitt (22) im Wesentlichen passgenau in den Sitz (2) einsetzbar und bei vorhandener zweiter Verdrehlage (V2) im Wesentlichen unbeweglich im Sitz (2) angeordnet ist.

11. Haltesystem (1) nach einem oder mehreren der vorhergehenden Ansprüche, bei welchem die Geometrie des Flanschabschnittes (22) derart an die Geometrie der Öffnungen (10, 11) angepasst ist, dass die fluchtenden Öffnungen (10. 11) bei erster Verdrehlage (V1) vom Flanschabschnitt (22) mit keinem oder geringem Spiel passierbar sind.

12. Wechselbauteil (21) für ein Haltesystem (1) nach einem oder mehreren der Ansprüche 1 bis 11, dessen Flanschabschnitt (22) einen ebenen Deckenabschnitt (26) aufweist und auf wenigstens einer Seite des Deckenabschnitts (26) mindestens eine hängende Dachschräge (25, 25'), die bei Fixierung des Flanschabschnittes (22) am Haltekopf (3) nicht mit dem Haltekopf (3) in Kontakt gebracht ist.

13. Wechselbauteil (21) nach Anspruch 12, welches auf seiner dem Deckenabschnitt (26) abgewandten Seite zur Verbindung mit einer Systemkomponente, wie beispielsweise einer Arbeitsvorrichtung oder einem Formatbauteil, vorgesehen ist und hierzu eine Welle und/oder Bolzen aufweist, der sich bei Fixierung des Flanschabschnittes (22) am Haltekopf (3) zumindest abschnittsweise entlang der gemeinsamen Längsachse (A) erstreckt.
